(19) Europäisches Patentamt
European Patent Office
Office européen des brevets

(11) EP 2 796 525 A1

(12) # EUROPEAN PATENT APPLICATION

published in accordance with Art. 153(4) EPC

(43) Date of publication:
**29.10.2014 Bulletin 2014/44**

(21) Application number: **12860237.2**

(22) Date of filing: **19.09.2012**

(51) Int Cl.:
***C09K 3/16*** *(2006.01)*
***C08F 290/06*** *(2006.01)*
***C08F 299/02*** *(2006.01)*
***C08L 55/00*** *(2006.01)*
***C08L 101/00*** *(2006.01)*

(86) International application number:
**PCT/JP2012/073881**

(87) International publication number:
**WO 2013/094262 (27.06.2013 Gazette 2013/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2011 JP 2011279613**

(71) Applicant: **Riken Vitamin Co., Ltd.**
**Chiyoda-ku, Tokyo 101-8370 (JP)**

(72) Inventors:
- **MUKAI ,Tsuyoshi**
**Osaka 5730065 (JP)**
- **YOSHIKAWA , Kimio**
**Osaka 5730065 (JP)**

(74) Representative: **Lord, Hilton David**
**Marks & Clerk LLP**
**90 Long Acre**
**London WC2E 9RA (GB)**

(54) **KNEADING-TYPE ANTISTATIC AGENT, THERMOPLASTIC RESIN COMPOSITION INCLUDING SAID AGENT, AND MOLDED ARTICLE**

(57) The present invention is to provide a kneading-type antistatic agent which can be obtained through polymerization simply and conveniently by irradiating active energy rays, and a kneading-type antistatic agent which can be kneaded into a thermoplastic resin, thereby imparting excellent permanent antistatic properties to a molded article without affecting the appearance of the molded article.

Therefore, the antistatic agent is a kneading-type antistatic agent which is a thermoplastic polymer obtained by irradiating active energy rays toward a solution which contains A Ingredient: a polymerizable monomer containing in one molecule one polyalkylene glycol and one polymerizable functional group selected from an acryloyl group and a methacryloyl group, B Ingredient: perchlorate and C Ingredient: photo polymerization initiator.

EP 2 796 525 A1

**Description**

FIELD OF THE INVENTION

The present invention relates to a kneading-type antistatic agent which is a thermoplastic polymer obtained by irradiating active energy rays to effect polymerization reactions, a thermoplastic resin composition which contains the antistatic agent, and a molded article which uses the resin composition.

BACKGROUND AND DESCRIPTION OF RELATED ART

Almost all plastics currently used in general are low in electric conductivity and likely to be charged. When plastics are charged, trouble occurs in manufacturing processes, products are stained or poor printing takes place. For these reasons, an antistatic agent has been used.
Antistatic methods are roughly categorized into a method for coating an antistatic agent on a plastic surface and a method for kneading an antistatic agent into a plastic. The method for kneading an antistatic agent is mainly used on an industrial scale, because this method is simple and convenient due to no increase in steps and effects lasting for a prolonged period of time. Among kneading-type antistatic agents, evaluation has been made for a kneading-type antistatic agent, that is, a permanent antistatic agent which is long in antistatic effects.
As conventional techniques for kneading an antistatic agent into a thermoplastic resin, there have been disclosed, for example, a (meta)acryl resin having polyoxyalkylene chains (refer to Patent Document 1, for example) and polyether ester amide (refer to Patent Document 2, for example). However, the above described conventional techniques are complicated in manufacturing processes of antistatic agents and also need time. Therefore, desired is an antistatic composition which may be obtained by simpler and more convenient manufacturing processes.
There has also been developed a resin composition with antistatic capability in which a cationic monomer, a reactive surface active agent, an ionic liquid or the like is contained in a polyfunctional acrylic oligomer and a polyfunctional polymerizable monomer, then, a photo polymerization initiator is added thereto to obtain a resultant solution, and active energy rays are irradiated toward the solution to cause polymerization (refer to Patent Document 3, for example).
Patent Documents are as set bellow.
Patent Document 1: Japan Patent Pre-Publication No. S63-101444
Patent Document 2: Japan Patent Pre-Publication No. S62-273252
Patent Document 3: Japan Patent Pre-Publication No. 2011-12240

SUMMARY OF THE INVENTION

Problems to be Solved by the Invention

An object of the present invention is to provide a kneading-type antistatic agent having thermoplasticity which can be obtained through polymerization simply and conveniently by irradiating active energy rays, that is, a kneading-type antistatic agent capable of imparting excellent permanent antistatic properties without affecting the appearance of a thermoplastic resin molded article.

Means for Solving the Problems

The present inventor et al. have conducted diligent research in order to solve the above problems, and as a result, they found that the problems can be solved by a thermoplastic polymer obtained by irradiating active energy rays toward a solution in which a specific polymerizable monomer which contains in one molecule one acryloyl group or one methacryloyl group (each of which is a polymerizable functional group), perchlorate and a photo polymerization initiator are blended. The present inventor et al. conducted further research based on the above findings and completed the present invention.
That is, the present invention has the following arrangements.

(1) A kneading-type antistatic agent which is a thermoplastic polymer obtained by irradiating active energy rays toward a solution which contains A Ingredient: a polymerizable monomer which contains in one molecule one polyalkylene glycol and one polymerizable functional group selected from an acryloyl group and a methacryloyl group, B Ingredient: perchlorate, and C Ingredient: a photo polymerization initiator.
(2) The kneading-type antistatic agent according to the previous description of (1) in which the solution contains D

Ingredient: a polymerizable monomer which contains in one molecule one acrylamide group, in addition to A Ingredient.

(3) The kneading-type antistatic agent according to the previous description of (1) or (2) in which A Ingredient has an oxyalkylene group of polyalkylene glycol, the average number of added moles of which is 45 or more.

(4) A thermoplastic resin composition in which the kneading-type antistatic agent according to any one of the above description of (1) to (3) is contained in a thermoplastic resin.

(5) A molded article which is molded by molding the thermoplastic resin composition according to the above description of (4).

Effect(s) of the Invention

The kneading-type antistatic agent of the present invention described in the above description 1 is able to impart antistatic properties to a thermoplastic resin composition by being kneaded into the composition, thereby keeping antistatic functions thereof for a prolonged period of time.

The kneading-type antistatic agent of the present invention described in the above description 2 exhibits such effects that it is able to keep the antistatic functions for a prolonged period of time by using A Ingredient together with D Ingredient and also easily solidified and handled conveniently.

The kneading-type antistatic agent of the present invention described in the above description 3 exhibits such effects that it is able to keep the antistatic functions for a prolonged period of time by using a specific polyalkylene glycol and is also greatly decreased in hygroscopicity, free of stickiness and handled easily.

The thermoplastic resin composition of the present invention described in the above description 4 can be used to easily produce various types of films, sheets and molded articles.

The molded article of the present invention described in the above description 5 is able to keep the antistatic functions for a prolonged period of time, and in particular, excellent in elasticity without affecting the favorable appearance of the molded article [the surface and inner layer (refers to a miscible state of the antistatic agent of the present invention)].

Mode(s) for Carrying Out the Invention

The polymerizable monomer used in the present invention which contains in one molecule one polyalkylene glycol and one polymerizable functional group selected from an acryloyl group and a methacryloyl group (hereinafter, from time to time, simply referred to as "A Ingredient") can be expressed by the following general formula (1).

[Chemical formula 1] General formula (1) $CH_2=CR^1COO(CH_2CH_2O)_nR^2$ or $CH_2=CR^1COO(CH(CH_3)CH_2O)_nR^2$

wherein $R^1$ denotes H or $CH_3$, $R^2$ denotes H or alkyl and n denotes an average number of added moles of oxyalkylene group.

There are no particular restrictions for an average number of added moles (n) of the oxyalkylene group of polyalkylene glycol contained in A Ingredient. The average number of added moles (n) is preferably about 4 or more, more preferably about 9 or more and still more preferably about 45 or more. Where the average number of added moles of the oxyalkylene group is about 45 or more, the thus obtained kneading-type antistatic agent is improved in hygroscopicity, which is favorable.

Specifically, A Ingredient includes, for example, diethylene glycol mono(meta)acrylate, triethylene glycol mono(meta)acrylate, dipropylene glycol mono(meta)acrylate, 2-methoxyethyl(meta)acrylate, methoxydiethylene glycol(meta)acrylate, methoxytriethylene glycol(meta)acrylate, methoxypolyethylene glycol(meta)acrylate, methoxypolypropylene glycol(meta)acrylate, 2-ethoxyethyl(meta)acrylate, 2-(2-ethoxyethoxy)ethyl(meta)acrylate, ethoxypolyethylene glycol(meta)acrylate, ethoxypolypropylene glycol(meta)acrylate and 4-nonylphenoxy polyethylene glycol(meta)acrylate. In the present invention, at least one or two or more of these specific examples may be used in combination. It is noted that the (meta)acrylate means both acrylate and methacrylate. This will apply to the description given in the following.

The perchlorate used in the present invention (hereinafter, from time to time, simply referred to as "B Ingredient") includes, for example, lithium perchlorate, sodium perchlorate, potassium perchlorate and ammonium perchlorate. In the present invention, at least one or two or more of these specific examples may be used in combination.

The photo polymerization initiator used in the present invention (hereinafter, from time to time, simply referred to as "C Ingredient") is a polymerizable initiator which produces radicals by means of active energy rays such as ultraviolet rays, including, for example, 1-hydroxycyclohexyl phenyl ketone, 2,2-dimethoxy-2-phenylacetophenon, 2-hydroxy-2-methyl-1-phenylpropane-1-on, 2-methyl-1-[4-(methylthio)phenyl]-2-morpholinopropane-1-on and 2,4,6-trimethylbenzoyl phosphine oxide. In the present invention, at least one or two or more of these specific examples may be used in combination.

The polymerizable monomer used in the present invention which contains in one molecule one acrylamide group (hereinafter, from time to time, simply referred to as "D Ingredient") can be expressed by the following general

formula (2).

[Chemical formula 2]

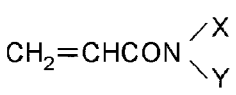

(2)

(X and Y are any given atom or group)

Specifically, D Ingredient includes, for example, acrylamide, N-isopropyl acrylamide, N,N-dimethyl acrylamide, N,N-diethyl acrylamide, N-methylol acrylamide, 2-hydroxyethyl acrylamide, N,N-dimethylaminoethyl acrylamide, N,N-dimethylaminopropyl acrylamide, N,N-diethylaminoethyl acrylamide and N,N-diethylaminopropyl acrylamide. In the present invention, at least one or two or more of these specific examples may be used in combination.

In a solution which contains from A Ingredient to C Ingredient or from A Ingredient to D Ingredient, there may be blended other ingredient as long as this will not inhibit effects of the present invention. The "other ingredients" include, for example, a polymerizable monomer other than A Ingredient and D Ingredient. Specifically, the polymerizable monomer includes, for example, a polymerizable monomer which is free of polyalkylene glycol in one molecule and contains one polymerizable functional group selected from an acryloyl group or a methacryloyl group [alkyl(meta)acrylate, hydroxyalkyl(meta)acrylate] and a polymerizable monomer which contains in one molecule one polymerizable vinyl group (for example, styrene, vinyl acetate and N-vinyl-2-pyrolidone). In the present invention, at least one or two or more of these specific examples may be used in combination.

There are no particular restrictions for blending amount of the above described individual ingredients. Where D Ingredient is used as a polymerizable monomer in addition to A Ingredient, a ratio of A Ingredient to D Ingredient (A:D) is from 100:0 to 30:70.

Further, in relation to 100 mass parts of any one of (1) A Ingredient, (2) total polymerizable monomers of A Ingredient and D Ingredient, (3) total polymerizable monomers of A Ingredient, D Ingredient and other polymerizable monomers and (4) total polymerizable monomers of A Ingredient and other polymerizable monomers, B Ingredient (perchlorate) is preferably from about 0.2 to 5 mass parts and more preferably from about 0.5 to 3 mass parts. And, C Ingredient (photo polymerization initiator) is preferably from about 1 to 10 mass parts and more preferably from about 2 to 7 mass parts in relation to the above total polymerizable monomer of 100 mass parts.

The kneading-type antistatic agent of the present invention can be obtained by the following method.

Active energy rays (for example, ultraviolet rays, electron rays and X rays) are irradiated toward a solution which contains (1) A Ingredient or A Ingredient and D Ingredient, (2) B Ingredient and (3) C Ingredient to effect radical polymerization reactions, thereby obtaining a kneading-type antistatic agent having thermoplasticity. Here, a preferable dose of the active energy rays is from 1000 $mJ/cm^2$ to 4000 $mJ/cm^2$ in terms of integrated light quantity in a case where ultraviolet rays are used. Since the kneading-type antistatic agent obtained by the above described method has thermoplasticity, the antistatic agent is kneaded with a thermoplastic resin, with heat being applied, by which it can be kneaded uniformly. It is noted that, in this case, the thermoplasticity is to indicate flowability prior to thermal decomposition.

The thermoplastic resin used in the present invention includes polyolefin, polyvinyl chloride, polystyrene, acryl resin, polyester, polycarbonate, polyamide and ABS resin. In the present invention, these generally used thermoplastic resins may be used without any particular restrictions.

The kneading-type antistatic agent of the present invention is added to a thermoplastic resin and kneaded uniformly, thus making it possible to obtain a thermoplastic resin composition of the present invention which has antistatic properties. Other additives may be blended into the thermoplastic resin composition, as long as the effects of the present invention are not inhibited. The other additive includes, for example, an antioxidant, ultraviolet ray absorber, light stabilizer, metal inactivating agent, core forming agent, lubricant, flame retardant, filler, colorant and inorganic filler. Specific examples of the additive include any known conventional agents without any particular restrictions.

A method for adding the kneading-type antistatic agent to a thermoplastic resin includes, for example, a method in which the kneading-type antistatic agent and a thermoplastic resin are kneaded, with heat being applied, and a method in which a master batch is prepared in advance which contains the kneading-type antistatic agent into a thermoplastic resin and the master batch and the thermoplastic resin are kneaded, with heat being applied. Any known device may be used as a kneader, including, for example, a bi-axial extruder and a Banbury mixer, etc.

The above described master batch is helpful in effectively dispersing the kneading-type antistatic agent. For example, based on 100 mass parts of the master batch, the kneading-type antistatic agent is blended from about 5 mass parts to 40 mass parts and preferably from about 10 mass parts to 30 mass parts. A method for preparing the master batch includes a method for kneading the antistatic agent by using, for example, a bi-axial extruder and a Banbury mixer, etc.

The thermoplastic resin composition of the present invention can be molded into a sheet or a film by using T-die molding, inflation molding and calendar molding, etc. It is acceptable that the film is stretched or not stretched. Further, an injection molding machine, a compression molding machine or the like can be used to obtain various types of molded articles. For example, blow molding is performed to mold bottles, etc.

Hereinafter, a description will be given with reference to examples. These examples are, however, only for describing the present invention and shall not limit the present invention.

[Examples]

<Preparation of kneading-type antistatic agent 1>

(1) Raw materials

(A Ingredient)

Methoxy polyethylene glycol #400 acrylate (trade name: NK ester AM-90G; manufactured by Shin-Nakamura Chemical Co., Ltd., n=9),
Methoxy polyethylene #550 acrylate (trade name: NK ester AM-130G; manufactured by Shin-Nakamura Chemical Co., Ltd., n=13),
Methoxy polyethylene glycol #400 methacrylate (trade name: NK ester M-90G; manufactured by Shin-Nakamura Chemical Co., Ltd., n=9),
Methoxy polyethylene glycol #2000 methacrylate (trade name: NK ester M-450G; manufactured by Shin-Nakamura Chemical Co., Ltd., n=45),
Methoxy polyethylene glycol #4000 methacrylate (trade name: NK ester M-900G; manufactured by Shin-Nakamura Chemical Co., Ltd., n=90).

It is noted that the above described n denotes an average number of added moles of oxyalkylene group.

(B Ingredient)

Sodium perchlorate (trade name: extra pure sodium perchlorate (anhydrous); manufactured by Wako Pure Chemical Industries Ltd.),
Lithium perchlorate (trade name: extra pure lithium perchlorate (anhydrous); manufactured by Wako Pure Chemical Industries Ltd.).

(C Ingredient)

1-hydroxycyclohexyl phenyl ketone (trade name: Irgacure 184; manufactured by Ciba Specialty Chemicals Inc.),
2-methyl-1-[4-(methylthio)phenyl]-2-morpholinopropane-1-on (trade name: Irgacure 907; manufactured by Ciba Specialty Chemicals Inc.).

(D Ingredient)

2-hydroxyethyl acrylamide (trade name: HEAA; manufactured by Kohjin Co., Ltd.),
Acrylamide (trade name: extra pure acrylamide; manufactured by Wako Pure Chemical Industries Ltd.),
N,N-dimethyl acrylamide (trade name: DMAA; manufactured by Kohjin Co., Ltd.),
N-isopropyl acrylamide (trade name: NIPAM; manufactured by Kohjin Co., Ltd.).
(Polymerizable monomers other than A Ingredient and D Ingredient) Polyethylene glycol #600 diacrylate (trade name: NK ester A-600; manufactured by Shin-Nakamura Chemical Co., Ltd.),
Ethoxylated penta-erythritol tetra-acrylate (trade name: NK ester ATM-35E; manufactured by Shin-Nakamura Chemical Co., Ltd.),
Lauryl acrylate (trade name: LA; manufactured by Osaka Organic Chemical Industry Ltd.),
Stearyl acrylate (trade name: STA; manufactured by Osaka Organic Chemical Industry Ltd.),
Polyalkylene alkylether monomethacrylate (trade name: NK Economer MTD-109; manufactured by Shin-Nakamura Chemical Co., Ltd.),
2-hydroxyethyl acrylate (trade name: HEA; manufactured by Osaka Organic Chemical Industry Ltd.),
N-vinyl-2-pyrolidone (trade name: N-vinyl-2-pyrolidone; manufactured by Nippon Shokubai Co., Ltd.).

(Other ingredient)

Polyethylene glycol #2000 (trade name: extra pure polyethylene glycol 2000; manufactured by Wako Pure Chemical Industries Ltd.)

(2) Blending

The above described raw materials were used to prepare kneading-type antistatic agents, and blending compositions thereof were shown in Table 1 and Table 2.

[Table 1]

| | Raw material | Examples | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| A Ingredient | Methoxy polyethylene glycol #400 acrylate | 100.0 | 70.0 | - | - | 69.0 | 55.0 | 30.0 | - | - | -40.0 | 40.0 | - | - | - |
| | Methoxy polyethylene glycol #550 acrylate | - | - | - | 50.0 | - | - | - | 30.0 | 30.0 | - | - | - | - | - |
| | Methoxy polyethylene glycol #400 methacrylate | - | - | 100.0 | - | - | - | - | - | - | 40.0 | - | - | - | - |
| | Methoxy polyethylene glycol #2000 methacrylate | - | - | - | - | - | - | - | - | - | - | - | 60.0 | - | - |
| | Methoxy polyethylene glycol #4000 methacrylate | - | - | - | - | - | - | - | - | - | 60.0 | - | 60.0 | 60.0 | 80.0 |
| D Ingredient | 2-hydroxyethyl acrylamide | - | - | - | - | - | 45.0 | 50.0 | 45.0 | 40.0 | - | - | - | - | - |
| | Acrylamide | - | - | - | - | - | - | - | - | 10.0 | 15.0 | - | 10.0 | 10.0 | - |
| | N,N-dimethyl acrylamide | - | - | - | - | - | - | - | - | 35.0 | 35.0 | - | - | - | - |
| | N-isopropyl acrylamide | - | - | - | - | - | - | - | - | - | - | - | 30.0 | 30.0 | 20.0 |
| B Ingredient | Sodium perchlorate | 2.0 | 1.0 | 2.0 | - | 1.0 | 1.5 | - | 2.0 | 1.5 | - | 2.0 | - | - | - |
| | Lithium perchlorate | - | - | - | 1.0 | - | - | 1.5 | - | - | 2.0 | - | 2.0 | 2.0 | 2.0 |
| C Ingredient | 1-hydroxycyclohexyl phenyl ketone | 4.0 | 3.0 | 4.0 | 4.0 | 3.0 | 5.0 | 4.0 | 5.0 | 5.0 | 5.0 | 4.0 | 5.0 | 5.0 | 5.0 |
| | 2-methyl-1-[4-(methylthio)phenyl]-2-morpholinopropane-1-on | - | - | - | 0.5 | - | - | 0.5 | - | - | 0.5 | - | - | - | - |
| Polymerizable monomer | Polyethylene glycol #600 diacrylate | - | - | - | - | 1.0 | - | - | - | - | - | - | - | - | - |

(continued)

| | Raw material | Examples | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| other than A Ingredient and D Ingredient | Ethoxylated penta-erythritol tetra-acrylate | - | - | - | - | - | - | - | - | - | - | - | - | - | - |
| | Lauryl acrylate | - | 30.0 | - | 30.0 | 30.0 | - | 5.0 | - | - | 5.0 | - | - | - | - |
| | Stearyl acrylate | - | - | - | 25.0 | - | - | - | - | - | - | - | - | - | - |
| | Polyalkylene alkylether monomethacrylate | - | - | - | 25.0 | - | - | 15.0 | 20.0 | 20.0 | - | - | - | - | - |
| | N-vinyl-2-pyrolidone | - | - | - | - | - | - | - | 5.0 | - | 5.0 | - | - | - | - |
| Other ingredient | Polyethylene glycol #2000 | - | - | - | - | - | - | - | - | - | - | - | - | - | - |
| The numerical values in the table are masses (g). | | | | | | | | | | | | | | | |

[Table 2 ]

| | Raw material | Comparative Example | | | | | | |
|---|---|---|---|---|---|---|---|---|
| | | 1 | 2 | 3 | 4 | 5 | 6 | 7 |
| A Ingredient | Methoxy polyethylene glycol #400 acrylate | - | 100.0 | - | - | 100.0 | - | - |
| | Methoxy polyethylene glycol #550 acrylate | - | - | - | - | - | - | 55.0 |
| D Ingredient | 2-hydroxyethyl acrylamide | - | - | - | - | - | 70.0 | 45.0 |
| B Ingredient | Sodium perchlorate | 1.0 | - | 1.0 | 2.0 | 2.0 | 1.5 | - |
| C Ingredient | 1-hydroxy cyclohexylphenyl ketone | - | 4.0 | 3.0 | 4.0 | - | 5.0 | 5.0 |
| Polymerizable monomer other than A Ingredient and D Ingredient | Ethoxylated penta-erythritol tetra-acrylate | - | - | - | 100.0 | - | - | - |
| | Lauryl acrylate | - | - | 30.0 | - | - | - | - |
| | Polyalkylene alkylether monomethacrylate | - | - | - | - | 30.0 | 30.0 | - |
| | 2-hydroxy ethylacrylate | - | - | 70.0 | - | - | - | - |
| Other ingredient | Polyethylene glycol #2000 | 100.0 | - | - | - | - | - | - |
| The numerical values in the table are masses (g). | | | | | | | | |

(3) Preparation of kneading-type antistatic agent

[Example 1]

Raw materials were weighed so as to give an amount two times the amount blended in Table 1 and placed into a light resistant container. The raw materials were agitated and mixed for 30 minutes at about 60 rpm at 50°C by a magnetic stirrer (model: SR-350; manufactured by Advantec Toyo Kaisha, Ltd.) and also by using a 5-cm stirrer. Thereafter, a resultant thereof was transferred to a plastic tray (25 x 15 x 2 cm) at which ultraviolet rays of 2000 mJ/cm$^2$ in terms of integrated light quantity were irradiated by using an ultraviolet ray irradiator (model: F300; manufactured by Fusion UV Systems Japan Co., Ltd.). Photo polymerization was performed to obtain a kneading-type antistatic agent (Example Product 1).

[Examples 2 to 14, Comparative Examples 1 to 7]

Operation was performed by the same method as that of Example 1 to obtain kneading-type antistatic agents (Example Products 2 to 14 and Comparative Example Products 1 to 7).

Here, Example Products 1 to 5 and Comparative Example Products 1 to 3 were available in a paste form with thermoplasticity. Example Products 6 to 14 and Comparative Example Products 6, 7 were available in a solid form with thermoplasticity. In contrast, Comparative Example Product 4 was available in a solid form devoid of thermoplasticity and Comparative Example 5 was not polymerized and available in a liquid form.

<Preparation of thermoplastic resin composition and molded article>

Blending and preparation of thermoplastic resin composition and molded article 1

[Trial Production 1]

There were prepared 200 g of the kneading-type antistatic agent (Example Product 1) and 800 g of a polypropylene resin (trade name: F327; manufactured by Prime Polymer Co., Ltd.). These substances were fed into a small-size counter rotation bi-axial extruder (model: TP-20-T; manufactured by TPIC Co., Ltd.) equipped with a strand die, melted and kneaded under the conditions that the temperature was from 190°C to 230°C, the pressures from 50 $kgf/cm^2$ to 80 $kgf/cm^2$, and the number of rotations of screw, 40 rpm. A resultant thereof was cut by using a water-cooled strand to prepare pellets. The thus prepared pellets were dried at 100°C for 5 hours to give a master batch. Next, there were prepared 500 g of the master batch and 500 g of a polypropylene resin (trade name: Prime polypro F327; manufactured by Prime Polymer Co., Ltd.). They were mixed and treated under the condition of a temperature of 190°C by using an injection molding machine (model: IS-55 EPN; manufactured by Toshiba Machine Co., Ltd.) to prepare a flat-plate shaped molded article (98 x 79 x 2 mm) (Trial Product 1).

[Trial Production 2 to 10]

In the preparation of Trial Product 1, operation was performed by the same method except that the kneading-type antistatic agent (Example Product 1) was replaced by other kneading-type antistatic agents (Example Products 2 to 5 and Comparative Example Products 1 to 5) and there were prepared molded articles (Trial Products 2 to 10). Here, neither of the kneading-type antistatic agents (Comparative Example Products 4, 5) were allowed to be kneaded into a thermoplastic resin, therefore, neither of Trial Products 9 and 10 were prepared.

(2) Blending and preparation of thermoplastic resin composition and molded article 2

[Trial Production 11]

There were prepared 100 g of a kneading-type antistatic agent (Example Product 6) and 900 g of a polypropylene resin (trade name: Prime Polypro F327; manufactured by Prime Polymer Co., Ltd.). These substances were mixed and treated under the condition of a temperature of 190°C by using an injection molding machine (model: IS-55 EPN; manufactured by Toshiba Machine Co., Ltd.) to prepare a flat-plate shaped molded article (98 x 79 x 2 mm) (Trial Product 11).

[Trial Production 12 to 21]

In the preparation of Trial Product 11, operation was performed by the same method except that the kneading-type antistatic agent (Example Product 6) was replaced by other kneading-type antistatic agents (Example Products 7 to 14 and Comparative Example Products 6, 7). And, there were prepared molded articles (Trial Products 12 to 21).

[Trial Production 22]

1000 g of a polypropylene resin (trade name: Prime Polypro F327; manufactured by Prime Polymer Co., Ltd.) was treated under the condition of a temperature of 190°C by using an injection machine (model: IS-55 EPN; manufactured by Toshiba Machine Co., Ltd.) to prepare a flat-plate shaped molded article (98 × 79 × 2 mm) (Trial Product 22: antistatic agent-free product).

<Evaluation of thermoplastic resin composition and molded articles>

The thus obtained molded articles (Trial Products 1 to 8 and 11 to 22) were evaluated for antistatic properties, appearance (surface and inner layer) and folding resistance by the following method.

(1) Evaluation of antistatic properties (before wiping with water)

The thus obtained molded articles were subjected to aging for 3 hours in a temperature controlled bath under the conditions of a room temperature of 20°C and humidity of 65% RH. And, each of the molded articles was measured for its surface specific resistance under the same conditions by using ULTRA MEGOHMMETER (model: SEM-10;

manufactured by DKK-TOA Corporation).

(2) Evaluation of antistatic properties (after washing with water)

The surface of the thus obtained molded article was washed for one minute in water kept at 25°C by using a non-woven fabric. The molded article was subjected to washing repeated ten times and the moisture was removed, and dried for 2 minutes at 60°C and, thereafter, aged for 3 hours under the conditions of a room temperature of 20°C and humidity of 65% RH. A resultant thereof was measured for a surface specific resistance under the same conditions by using a hyper dielectric scale (model: SEM-10; manufactured by DKK-TOA Corporation).
The surface specific resistance was measured in accordance with JIS K6911. The results thereof are shown in Table 4.
It is noted that the molded article is normally 1 x $10^{16}$ Ω or more in surface specific resistance. However, on addition of the antistatic agent, the surface specific resistance was decreased to about 1 × $10^9$ to $10^{12}$Ω. The lower the resistance value, the better the antistatic properties.

(3) Evaluation of appearance of molded article (state of surface)

Visual evaluation was made for a state of the surface of the thus obtained molded article based on the evaluation criteria given in Table 3. The results are shown in Table 4.

(4) Evaluation of appearance of molded article (state of inner layer)

Visual evaluation was made for a state of an inner layer (miscible state of the kneading-type antistatic agent) by exposing the thus obtained molded article to light of a fluorescent lamp in accordance with the evaluation criteria given in Table 3. The results are shown in Table 4.

(5) Elasticity of molded article

The thus obtained molded article was folded at 90 degrees manually and visual evaluation was made for the surface of a folded part of the molded article as well as a state of destruction and a state of detachment of the inner layer thereof in accordance with the evaluation criteria given in Table 3. The results are shown in Table 4. Poor elasticity resulted in poor moldability of the thermoplastic resin composition.

[Table 3]

| Evaluation items | Evaluation criteria | Evaluation |
|---|---|---|
| Appearance (state of surface) | A state that the surface is smooth and glossy. | ◎ |
| | A state that the surface is smooth but not very glossy. | ○ |
| | A state that some traces of injection molding are found on the surface and some irregularities are present on the surface. | Δ |
| | A state that many traces of injection molding are found on the surface and irregularities are present on the surface. | × |
| Appearance (state of inner layer) | A state that the antistatic agent is uniformly dispersed to give transparency. | ◎ |
| | A state that the antistatic agent is uniformly dispersed but giving certain turbidity and transparency is slightly poor. | ○ |
| | A state that the antistatic agent is poorly dispersed, giving a slight marble appearance and transparency is poor. | Δ |
| | A state that the antistatic agent is poorly dispersed, giving certain separation and a whitish opaque appearance. | × |
| Refractivity | A state that folding causes no whitening, cracks, etc. | ◎ |
| | A state that folding causes very slight whitening. | ○ |
| | A state that folding causes streaks or cracks on the inner layer. | Δ |
| | A state that folding destroys or detaches the inner layer and the surface. | × |

[Table 4]

| Molded article | Kneading-type antistatic agent to be blended | Surface specific resistance (Ω/□) | | Appearance | | Elasticity |
|---|---|---|---|---|---|---|
| | | Before washing with water | After washing with water | Surface | Inner layer | |
| Trial Product 1 | Example Product 1 | $7\times10^{9}$ | $9\times10^{9}$ | ○ | ○ | ○ |
| Trial Product 2 | Example Product 2 | $8\times10^{10}$ | $7\times10^{10}$ | ○ | ◎ | ○ |
| Trial Product 3 | Example Product 3 | $8\times10^{9}$ | $8\times10^{9}$ | ○ | ○ | ○ |
| Trial Product 4 | Example Product 4 | $9\times10^{10}$ | $8\times10^{10}$ | ○ | ◎ | ◎ |
| Trial Product 5 | Example Product 5 | $1\times10^{11}$ | $1\times10^{11}$ | ○ | ○ | ○ |
| Trial Product 6 | Comparative Example Product 1 | $5\times10^{9}$ | $1\times10^{15}$ | Δ | × | ○ |
| Trial Product 7 | Comparative Example Product 2 | $4\times10^{14}$ | $7\times10^{14}$ | ○ | ○ | ○ |
| Trial Product 8 | Comparative Example Product 3 | $>10^{16}$ | $>10^{16}$ | ○ | ○ | ○ |
| Trial Product 9 | Comparative Example Product 4 | - | - | - | - | - |
| Trial Product 10 | Comparative Example Product 5 | - | - | - | - | - |
| Trial Product 11 | Example Product 6 | $9\times10^{9}$ | $9\times10^{9}$ | ○ | ○ | ○ |
| Trial Product 12 | Example Product 7 | $9\times10^{10}$ | $8\times10^{10}$ | ◎ | ◎ | ◎ |
| Trial Product 13 | Example Product 8 | $7\times10^{10}$ | $8\times10^{10}$ | ○ | ○ | ○ |
| Trial Product 14 | Example Product 9 | $4\times10^{10}$ | $4\times10^{10}$ | ◎ | ◎ | ◎ |
| Trial Product 15 | Example Product 10 | $1\times10^{11}$ | $1\times10^{11}$ | ○ | ○ | ○ |

(continued)

| Molded article | Kneading-type antistatic agent to be blended | Surface specific resistance (Ω/□) | | Appearance | | Elasticity |
|---|---|---|---|---|---|---|
| | | Before washing with water | After washing with water | Surface | Inner layer | |
| Trial Product 16 | Example Product 11 | $6\times10^{10}$ | $8\times10^{10}$ | ○ | ○ | ○ |
| Trial Product 17 | Example Product 12 | $6\times10^{11}$ | $7\times10^{11}$ | ○ | ○ | ◎ |
| Trial Product 18 | Example Product 13 | $9\times10^{11}$ | $9\times10^{11}$ | ◎ | ◎ | ◎ |
| Trial Product 19 | Example Product 14 | $1\times10^{11}$ | $1\times10^{11}$ | ○ | ○ | ○ |
| Trial Product 20 | Comparative Example Product 6 | $2\times10^{14}$ | $6\times10^{14}$ | ○ | Δ | Δ |
| Trial Product 21 | Comparative Example Product 7 | $6\times10^{13}$ | $6\times10^{13}$ | Δ | Δ | Δ |
| Trial Product 22 | - | $>10^{16}$ | $>10^{16}$ | ◎ | ◎ | ◎ |

The above results indicated that all the Trial Products using kneading-type antistatic agents of the Example Products were $1 \times 10^{12}$(Ω/□) or less in surface specific resistance before and after washing with water, having permanent antistatic properties. Further, the Trial Products were favorably evaluated for the appearance (surface and inner layer) and folding resistance.

In contrast, all the Trial Products using kneading-type antistatic agents of the Comparative Example Products were 1 x $10^{13}$(Ω/□) or more in surface specific resistance after washing with water or in surface specific resistance before and after washing with water and devoid of permanent antistatic properties. Further, the Trial Products 6, 20, 21 were not favorable in terms of appearance (at least one of the surface and the inner layer) and the Trial Products 20, 21 were not favorable in terms of elasticity, either.

<Evaluation of hygroscopicity of kneading-type antistatic agents>

Some kneading-type antistatic agents high in hygroscopicity may absorb moisture to cause blocking, thus resulting in poor handling, if not properly stored. Further, where kneading-type antistatic agents high in hygroscopicity are mixed with a thermoplastic resin to prepare injection molded articles, silver streaks may develop on the surface thereof. Thus, evaluation was made for the hygroscopicity by employing the following method to measure percentages of moisture absorbed by the kneading-type antistatic agents.

The thus obtained kneading-type antistatic agents, each 3 g, were accurately weighed on a laboratory dish and allowed to stand still for 24 hours in an environment of 20°C and humidity of 65% RH. Thereafter, the kneading-type antistatic agent and the laboratory dish were measured for each mass to calculate percentages of moisture absorbed by the kneading-type antistatic agent with reference to the following formula. The results are shown in Table 5. The lower the percentages of moisture absorbed, the lower the amount of moisture absorbed. Therefore, it is shown that hygroscopicity is improved.

$$\text{Percentages of moisture absorbed} = \{(B\text{-}A)/A\} \times 100$$

A= Mass of kneading-type antistatic agent and laboratory dish before moisture absorption treatment
B= Mass of kneading-type antistatic agent and laboratory dish after moisture absorption treatment

[Table 5]

| Kneading-type antistatic agents | Percentages of moisture absorbed by kneading-type antistatic agents |
|---|---|
| Example Product 1 | 9.9% |
| Example Product 2 | 9.1% |
| Example Product 3 | 10.1% |
| Example Product 4 | 9.4% |
| Example Product 5 | 9.3% |
| Example Product 6 | 9.8% |
| Example Product 7 | 9.4% |
| Example Product 8 | 9.8% |
| Example Product 9 | 9.6% |
| Example Product 10 | 10.2% |
| Example Product 11 | 5.0% |
| Example Product 12 | 4.2% |
| Example Product 13 | 3.8% |
| Example Product 14 | 2.8% |

The above results indicate that the Example Products 11 to 14 were lower in percentages of moisture absorption than other Example Products and improved in hygroscopicity.

**Claims**

1. A kneading-type antistatic agent which is a thermoplastic polymer obtained by irradiating active energy rays toward a solution which contains A Ingredient: a polymerizable monomer which contains in one molecule one polyalkylene glycol and one polymerizable functional group selected from an acryloyl group and a methacryloyl group, B Ingredient: perchlorate, and C Ingredient: a photo polymerization initiator.

2. The kneading-type antistatic agent according to claim 1 in which the solution contains D Ingredient: a polymerizable monomer which contains in one molecule one acrylamide group, in addition to A Ingredient.

3. The kneading-type antistatic agent according to claims 1 or 2 in which A Ingredient has an oxyalkylene group of polyalkylene glycol, the average number of added moles of which is 45 or more.

4. A thermoplastic resin composition in which the kneading-type antistatic agent according to any one of claims 1 to 3 is contained in a thermoplastic resin.

5. A molded article which is molded by molding the thermoplastic resin composition according to claim 4.

## INTERNATIONAL SEARCH REPORT

International application No.
PCT/JP2012/073881

A. CLASSIFICATION OF SUBJECT MATTER
*C09K3/16*(2006.01)i, *C08F290/06*(2006.01)i, *C08F299/02*(2006.01)i, *C08L55/00*(2006.01)i, *C08L101/00*(2006.01)i

According to International Patent Classification (IPC) or to both national classification and IPC

B. FIELDS SEARCHED

Minimum documentation searched (classification system followed by classification symbols)
C09K3/16, C08L55/00, C08L101/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 11-256144 A (Mitsubishi Paper Mills Ltd.), 21 September 1999 (21.09.1999), claims 1 to 4; paragraphs [0001], [0021]; examples (Family: none) | 1-5 |
| Y | JP 07-278391 A (Sanken Kako Kabushiki Kaisha), 24 October 1995 (24.10.1995), claims 1 to 4; paragraph [0013]; examples (Family: none) | 1-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 October, 2012 (31.10.12) | 13 November, 2012 (13.11.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/073881

C (Continuation). DOCUMENTS CONSIDERED TO BE RELEVANT

| Category* | Citation of document, with indication, where appropriate, of the relevant passages | Relevant to claim No. |
|---|---|---|
| Y | JP 02-120370 A (Dai-Ichi Kogyo Seiyaku Co., Ltd.), 08 May 1990 (08.05.1990), claim 1; page 3, upper right column, lines 12 to 19; page 3, lower left column, lines 11 to 19 (Family: none) | 1-5 |
| Y | JP 61-176651 A (Mitsubishi Electric Corp.), 08 August 1986 (08.08.1986), claims 1 to 2; page 2, upper right column, line 4 to lower left column, line 2; examples (Family: none) | 2 |
| A | JP 2005-206776 A (Toyo Ink Manufacturing Co., Ltd.), 04 August 2005 (04.08.2005), claims 1 to 10 & TW 200700522 A | 1-5 |
| A | JP 2007-327043 A (Tokyo Institute of Technology), 20 December 2007 (20.12.2007), claims 1 to 10 (Family: none) | 1-5 |
| A | JP 2003-261854 A (Sanyo Chemical Industries, Ltd.), 19 September 2003 (19.09.2003), claims 1 to 14 (Family: none) | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S63101444 B
- JP S62273252 B
- JP 2011012240 A